# EUROPEAN PATENT SPECIFICATION

(11) **EP 1 451 672 B1**
(45) Date of publication and mention of the grant of the patent: **15.02.2006**
(21) Application number: 02801604.6
(22) Date of filing: 18.10.2002
(51) Int. Cl.: G06F 3/033, G06F 17/00, G06T 15/00

(54) **RICH COMMUNICATION OVER INTERNET**
RICH-KOMMUNIKATION ÜBER DAS INTERNET
COMMUNICATION RICHE VIA L'INTERNET

(30) Priority: 19.10.2001 NO 20015126; 19.10.2001 US 330072 P
(43) Date of publication of application: 01.09.2004
(73) Proprietor: Dmates AS, 0183 Oslo (NO)
(72) Inventor: BENCZE, Paul, N-0170 Oslo (NO); NORDBY, Kjetil, N-1540 Vestby (NO); BORRESEN, Stian, N-0654 Oslo (NO)
(74) Representative: Gillard, Matthew Paul
(86) International application number: PCT/NO2002/000378
(87) International publication number: WO 2003/034196

(56) References cited:
- EP-A2- 0 991 009
- WO-A2-01/67759
- WO-A2-01/71472
- US-A- 5 880 731
- US-B1- 6 219 045

## Description

### Introduction

The present invention relates to an intuitive and user-friendly user interface for rich communication on a network which interacts in an efficient way with other applications and services. In particular, the present invention relates to rich and expressive real-time communication over the Internet supported by animated objects using the objects to increase the expressive and emotional bandwidth of instant messaging. The invention is suited for use on a broad range of Internet terminal types, from mobile phones to PC's and TV's with set-top boxes.

### Background of the invention

In recent years, there has been much diverse research, which explores the use of computing in ways that involve human emotion. This area is commonly referred to as *affective computing.* This includes research on the use of emotions in human-computer interaction, artificial intelligence (AI) and agent architectures which are inspired by the mechanisms of emotion, the use of emotion in computer-mediated communication, the study of human emotion through computers and philosophical issues concerning, for example the extent to which it is meaningful to talk about emotion in computational terms.

Emotional expression is often described as social and communicative by nature. Humans are, after all, fundamentally social beings. Infants rely completely on others to meet their needs at birth and throughout early childhood, and continue to rely on others to help meet their needs to varying degrees throughout life. A primary function of emotions is to communicate state information to others, in order to enable them to assist in meeting the needs of the individual.

There are various dimensions associated with mediated interaction. It can be synchronous or asynchronous. The communication can be written, auditory or visual. Mediated communication can develop its own form, syntax and context. One can see that writing for example has developed into a medium that can bring forth a whole range of emotions and feelings that are impossible to replicate using the spoken word in a face-to-face situation. In a similar way, telephonic interaction has its own style and form. This includes the tone of voice one uses and the way that one replaces the visual with verbal gestures.

A part of the information richness in face-to-face interaction lies in its spur-of-the-moment nature. Conversation partners have a large set of para-communication types available: various intended utterances, winks, nods, grounding and clearance signals. One of the things that makes synchronous face-to-face interaction particularly rich and also particularly precarious, is that the signs one 'gives off' are a large portion of the total message.

Humans are experts at interpreting facial expressions and tones of voice, and making accurate inferences about others internal states from these clues.

Controversy rages over anthropomorphism. The types of emotional needs, which the present invention aims at giving support for accommodating in computer-mediated communications, include the following:
- for attention - strong and constant in children, fading to varying degrees in adulthood
- to feel that one's current emotional state is understood by others (particularly strong during emotional response)
- to love and feel reciprocity of love
- to express affection, and feel reciprocated affection expressed
- for reciprocity of sharing personal disclosed information
- to feel connected to others
- to belong to a larger group
- for intimacy
- to feel that one's emotional responses are accepted by others
- to feel accepted by others
- to feel that emotional experiences and responses are 'normal'

Instant messaging (IM) is, like email and chat, a way for net users to keep in touch with each other. Unlike chat and email, IM allows users to see when their friends are online and to initiate instant, live communication.

The market for IM solutions is expected to show exceptional growth in the coming years driven by broadband telecommunication and cable offerings, always-on Internet connection from mobile phones as well as by changes in the business environment and in people's lifestyles.

IM type applications are expected to replace email as the main communication channel of the Internet over the next few years.

Present IM solutions are focused primarily on task and work related communication needs. The rapidly increasing accessibility of the Internet outside the work environment is creating a large and fast growing market for IM solutions better suited for private and social use.

A serious limitation of IM as a communication channel is the lack of support for para-communication types and expressions of emotion, affection, humour and irony.

The present invention overcomes the limitations of known IM communication by using an intuitive and user-friendly user interface for rich communication over the Internet. Instant messaging applications developed according to the present invention are also more effective in working together with other types of applications simultaneously active on the screen of the user terminal.

Applications developed according to the invention enable people to exchange both text, gestures and integrated text/gestures messages in real-time over the Internet. Two or more people can participate in the messaging sessions.

Applications developed according to the invention are well suited for deployment on a wide range of Internet terminal types - desktop PC's, TV's and mobile terminals.

Instant messaging applications such as ICQ, MSN messenger and Yahoo messenger let people communicate in real-time over the Internet. The communicated information is normally text-based. The text messages can be supplemented with 'emoticons' - small picture icons representing different expressions, gesture, moods or other non verbal messages.

The present invention increases the expressive and emotional bandwidth of instant messaging through the use of animated objects to present a wide range of emotional and affective expressions. Users are represented by avatars, which are animated objects controlled by a user.

In avatar chat sessions, users are normally represented in the form of animated character objects in a chat room or virtual world. The animated objects can normally be moved around in the chat space or virtual world The animated objects cannot be moved outside of the frame representing the chat room. Nor can the animated objects interact with other active applications on the user screen.

US-5,880,731 describes the use of avatars with automatic gesturing and bounded interaction in an on-line chat session. This is a typical example on avatar chats with the graphical objects restricted to the frames of a specific program. Another example is shown in US-6,219,045 describing a scalable virtual world chat client-server system.

WO-0167759-A2 discloses a rich media communication system which provides a user with a three dimensional communication space or theatre having rich media functions. The user may be represented in the theatre as a segmented video image or as an avatar. The user is also able to communicate by presenting images, videos, audio files, or text within the theatre. The system may include tools for allowing lowered cost of animations, improved collaboration between users, presentation of episodic content, web casts, newscasts, infotainment, advertising, music clips, video conferencing, customer support, distance learning, advertising, social spaces, and interactive game shows and content.

EP-0991009-A2 describes information processing apparatus, an information processing method and presentation medium. The information processing apparatus for presenting a 3-D virtual space allowing an avatar being operated to communicate with other avatars includes storage means for storing an indicator set to show whether or not information owned by the avatar can be communicated with the other avatars on the basis of the indicator stored in the storage means. As a result, a plurality of clients is allowed to experience a 3-D virtual space without substantially increasing the amount of processing of the system and the amount of communication on a transmission line.

WO-0171472-A2 discloses a method for entering information in respect of Web applications into a data record which utilises a virtual environment. A user can direct an avatar in this environment and at least one location in the virtual environment is associated with a field of said data record and with one or more selectable information options for inclusion in said field. The user is provided with representations of selectable information options distributed around the location and the position of the avatar in the virtual environment is monitored. In the event that the avatar moves into a predetermined proximity with one of the representations of the selectable options, the selection of that one of the selectable options is detected and that selected one option is then stored in the associated field of the data record.

All of the above documents disclose avatars restricted to one virtual environment, i.e. controlled and restricted within one program.

The advantages of the present invention compared to known avatar chats are primarily related to the animated objects being freely moveable on the whole user screen. It thus becomes possible for the animated objects to interact with other objects and applications present on the user screen. The animated objects are less intrusive and distracting for the user when the user's primary focus is on another application, for instance a text processor.

On a PC, MS Windows, Linux or another operating systems will function as the user interface between a user and various other programs. These programs can interact with each other. A word processor program like MS Word will function as a user interface between a user and the spreadsheet program MS Excel if the user starts MS Excel as a linked object from within Word. The present invention will also represent a user interface between the user and other applications.

According to the invention, the users can place the animated object(s) representing themselves and other users on the user interface screen of their Internet terminal. Users can also place animated object(s) representing Internet based services on the user interface screen of their Internet terminal. The animated objects representing the different users and/or services can freely and independently be moved around and placed anywhere on the user interface screen of the users Internet terminals.

Users can then communicate and share information with each other through interaction with the animated objects representing themselves and other users. Users can further communicate and interact with Internet based services through interaction with the animated objects representing themselves and the animated objects representing Internet based services. Groups comprising two or more users can share Internet based services through interaction with the animated objects representing themselves, the animated objects representing other users and the animated objects representing Internet based services. Users can communicate and share information through interaction between the animated objects and manifestations of other software applications on their terminals. The interaction of the users can be done by using a computer mouse, keyboard, remote control, pointing device or voice commands to make their representation (animated object) present information. The information is presented in the form of an animation sequence performed by the animated object, possibly in combination with animation sequences performed by the animated objects representing one or more of the user's communication partners. The animation sequences can be combined with text, audio, or other forms of information representations.

The objects stated above are achieved by means of the method, as set forth in the appended set of claims.

### Detailed description

The present invention relates to an intuitive and user-friendly user interface for rich communication on a network and which interacts in an efficient way with other applications and services. In particular, the present invention relates to rich and expressive real-time communication over the Internet supported by animated objects using the objects to increase the expressive and emotional bandwidth of instant messaging.

The present invention comprises thus a method for communicating synchronous information and gestures from a single user on a terminal to a plurality of users on other terminals in a network, the method comprising the steps of:
presenting users in the form of animated objects freely moveable on the terminals screens, said animated objects floating over the screen background and any applications on the screen,
initiating, upon detecting objects which represent other users on the screen, in the proximity zone of the object representing the user, interaction with said other terminals associated with respective other users,
on one terminals, receiving signals from a user operated input device indicative of a specific action or expression to be represented as animation of the said object representing said user,
reconstructing and playing an animation representing the action or expression corresponding to said signals received from a user operated input device, on said one user terminal,
transmitting through said network to the other terminals, the received signals from the user input device, describing the initiated action, making thus this information available for other users.

In a preferred embodiment, the initiation is activated when objects placed freely on the screen, are moved closer to each other than 300 twips on the user screen.

In another preferred embodiment, the initiation is activated when users interact with the objects representing themselves on the user screen.

Further, in another preferred embodiment the initiation is activated when users interact with an object representing another user on the user screen.

In a preferred embodiment, the animation signals received are instructions to a skeletal animation system.

In a preferred embodiment, the animations are represented as floating above the background and other applications on the screen by clipping the region on which the animations are represented around the edge of the animated object.

In a preferred embodiment, the animations are represented in the form of 3D renderings created from the animation signals by a processor on the user's terminal. In a preferred embodiment, the reconstruction includes receiving and interpreting animation information sent from other users, checking if animation already exists on the user's terminal.

In a preferred embodiment, the signals are transmitted in the form of XML encoded messages.

In another preferred embodiment, the signals are transmitted in the form of SOAP messages transmitted over HTTP.

In a preferred embodiment, the signals are transmitted over TCP or UDP protocols.

In a preferred embodiment, the input device is a computer mouse, keyboard, remote control, pointing device, VR peripherals, camera and/or voice commands communicating the specific action or expression.

The invention comprises also a method for sharing information and applications between a plurality of users on terminals in a network, the method comprising the steps of:
presenting users in the form of animated objects freely moveable on the terminal screens,
initiating sharing of an application between a group of users by moving animated objects representing the users into the window area representing an application.

The invention further comprises a method for transmitting or making files available to a user on a terminal in a network, the method comprising the steps of:
presenting users in the form of animated objects freely moveable on the terminal screens,
moving the icon or other representation of the file to be shared into the proximity zone of the animated object representing the user.

The invention further comprises a method for initiating a synchronous communication session between a plurality of users on other terminals in a network, the method comprising the steps of:
presenting users in the form of animated objects freely moveable on the terminal screens,
initiating, upon detecting 2 or more objects which represent other users on the screen, in the proximity zone of the object representing the single user, group communication and interaction with said other terminals associated with respective other users, and persisting the group to a storage structure on the network.

Seen from the client's point of view, the rich communication with gestures is achieved by presenting users, in a chat session, in the form of animated obj ects freely moveable on the user screen. The animated objects are selected and downloaded locally to the client from a server on the network. Communication and interaction with other users is initiated when objects on the user screen representing other users are moved into the proximity zone of an object representing the user. The user can be represented in several instances at once allowing the user to participate in multiple proximity zones at once. By placing an object representing another user on the desktop, the other user is granted instant and continuous access to presence information from the user. Users who have their representation on the desktop without being in the proximity zone of other characters will be able to broadcast status gestures to all users subscribing to information from the user by manipulating his screen representation. A user can at any time change his or her representation by manipulating the representation. It is possible to have different representations for different instances of the user. Transmission of gestures can be initiated through manipulation of a text input box, a drop down menu, direct manipulation of the representations or direct access through shortcuts triggered by various physical interfaces. Gestures can be synchronized directly with text messages by adding the command into the text string. Gesture also can be accompanied by sound coordinated with the motion. The representations can make gestures directed towards the screen. In a group situation with more than two participants the representations may form groups which interact synchronously towards another representation. After a gesture is sent, the representation will make a transition to an idle state which can reflect the last acted gesture. The representations can alter size according to activity or user input. The terminal receives signals generated from a user operated input device indicative of a specific action or expression to be represented as animation of the object representing the user. Input devices may include a computer mouse, keyboard, remote control, pointing device, VR (Virtual Reality) peripherals, camera and/or voice commands. A command action which initiates a gesture can be typed in or accessed through a pull down menu accessed through the keyboard. The menu is controlled with mouse pointer, number or arrow keys. A gesture can also be suggested by the system as a result of interpreting the text input. The user can enter any number of animations into a text string. Some of the animations can also be directly altered in the text interface through a script. Some gestures can be influenced by the receiving representation through counter gestures. The counter gestures are made available in the interface in different situations, i.e. representation starts an aggressive move and the receiving character responds by altering the initiated gesture.

The communication can also include sharing of applications (between two computers, both of which can view and interact in the session) and files, i.e. a user using a browser may share the browsing experience with several other users taking part in the communication session, and at the same time communicate expressions by inputting animation instructions to the client. An application sharing session can be initiated by dragging other user representations into the proximity zone of an application. One can also initiate a shared application by manipulating a representation of another user.
A received file can be received and presented visually by the relevant user representation.

In communication with text based IM applications, gestures sent to users are translated to hyperlinks. If the hyperlink is activated by the receiving system user, a web page is open with tools to send and receive gesture messages.

In a preferred embodiment of the invention the information describing the interaction is encoded in XML (extensible Markup Language) and routed between the users by a presence and notification server on the network. Alternative form of encoding the information as well as transmission of messages directly between users terminals can however be envisaged. The information describing the interaction contains animation instructions which are interpreted by software application on the users' terminals. The type of terminal used, will decide the complexity and layout of the rendering of the information. The software application on a terminal with good graphic capabilities will render real-time 3D animation on the user terminal screen on the basis of skeletal animation instructions contained in the animation instructions. A low-end terminal with limited graphics capabilities, for instance a mobile phone, will show a sequence of pre-rendered images which are downloaded from the network on the basis of instructions contained in the information describing the interaction. On a terminal with text-only capabilities the interaction will be described in text. On a audio-only terminal the interaction will be described in audio. The signals in the form of XML encoded messages, SOAP (Simple Object Access Protocol) messages or other type of message encoding may be transmitted over for example TCP (Transmission Control Protocol) or UDP (User Datagram Protocol) protocols.

In one embodiment of the invention a presence and notification server connected to user terminals by means of a network that coordinates communication of information and gestures from one user on a terminal to a plurality of users on other terminals in the network by routing and sending information to users taking part in a communication session over the Internet. Information about participating users is stored in a data structure on a server in the network. The server keeps track of the types of terminals each user is using and adapts the information transmitted to each terminal accordingly. The data structure containing information about the users and their terminals could be part of the presence and notification server software or it could be part of a separate system communicating with the presence server, for instances an LDAP (Lightweight Directory Access Protocol) server. The above description is illustrative and not restrictive. In another embodiment of the invention the communication session is initiated over SIP (Session Initiation Protocol) while the near-real time communication and interaction between users is routed directly between users (Peer-to-peer).

With reference to the drawings, the following detailed description will explain how this is obtained. The drawings illustrate a preferred embodiment of the present invention, and it is obvious that a person skilled in the art may well derive other variations.

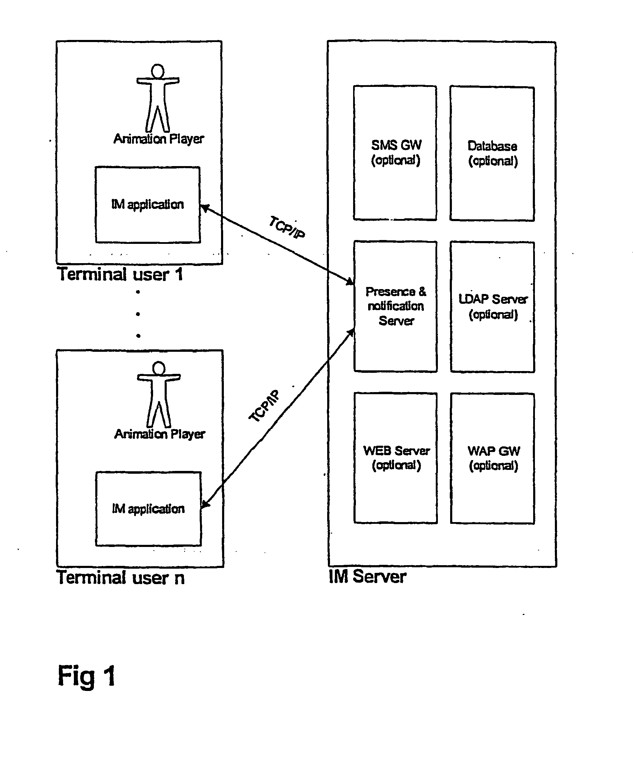

FIG. 1 shows a network diagram showing a plurality of users communicating with messages containing animation instructions and text being routed by an IM server. The clients have an IM application installed which is able to communicate with the IM server. The communication to and from the IM server is over TCP/IP. Users are offered a plurality of animated objects made available on an IM server. Users select one or more animated objects to represent themselves in computer mediated communication sessions. Messages describing the animations and information are sent from the user's terminal to the IM server. The IM server forwards the messages to terminals used by the communication partners. The messages are interpreted by the terminals and the information is presented both on the user terminal from where the message is sent and on the terminals of the active communication partners. The methods used for presenting the information are dependant on the capabilities of the Internet terminals used by the different communication partners. Information that is presented in the form of an animation sequence on one terminal, for instance a desktop PC or TV' set with set-top box, could, on for instance a mobile phone, be represented in text or audio form.

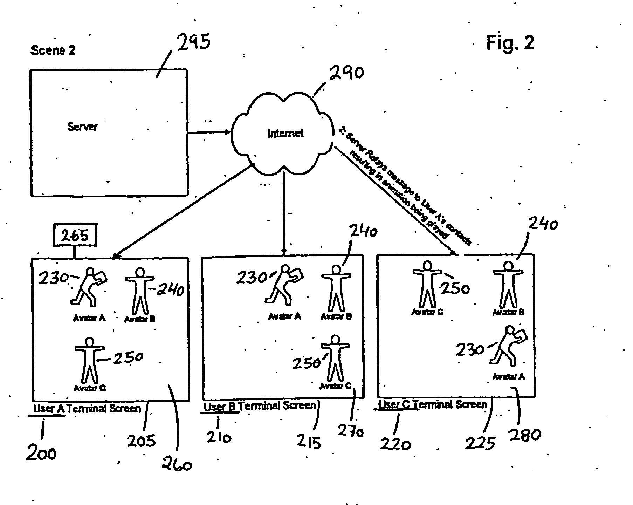

FIG. 2 shows a sequence of screens showing a user scenario in two steps where in scene 1 user A initiates an animation by sending a message describing the animation to an IM server. In scene 2 the message has been relayed from the IM server to user A's subscribers resulting in the animation being played on these user's screens.

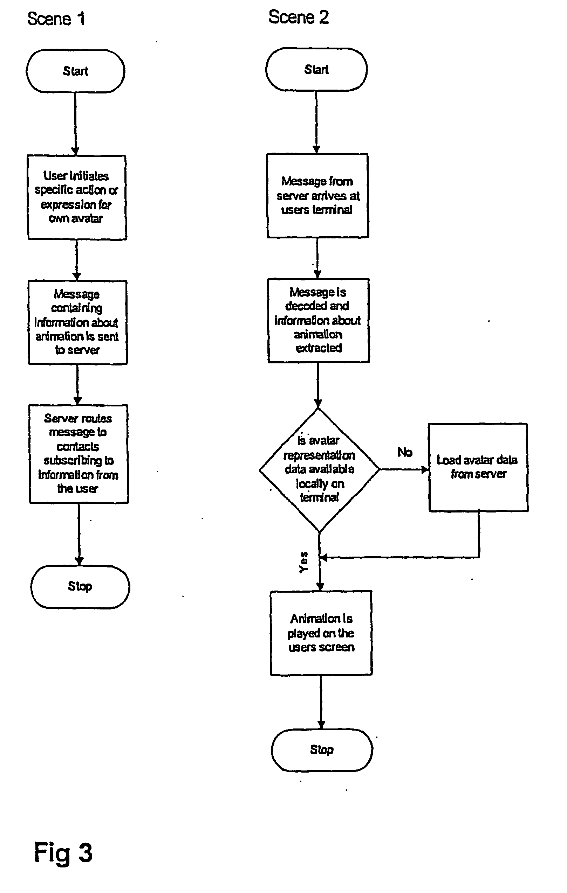

FIG. 3 is a flow chart that defines the logical steps implemented in the use scenario shown in fig.2. Scene 1 describes how messages are sent. Sending user initiates a specific action or expression of own avatar. The message containing the information about the information is then sent to the IM server. The server will then route the message to contacts currently subscribing to the information. Scene 2 illustrate how messages are received. Messages from the IM server arrives at users terminals. The messages are then decoded and information about animation is extracted. Each terminal will then check if the current animation is present locally on the terminal. If this is not the case, it will be downloaded from the IM server. The animation is then played on the users' terminal screens.

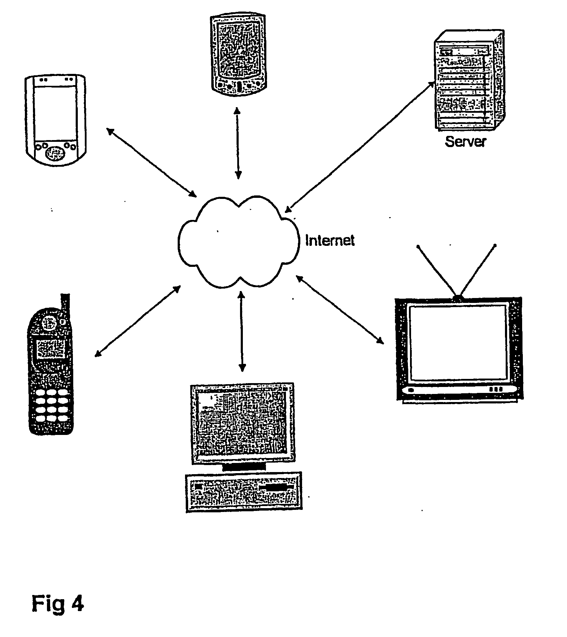

FIG. 4 illustrates some of the terminal types suitable for use in implementing the present invention.

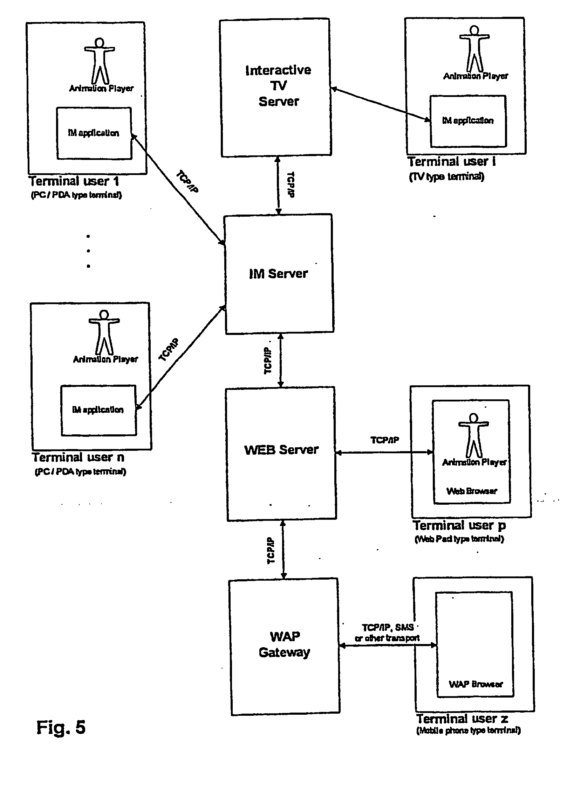

FIG. 5 shows a schematic block diagram of a sample network configuration suitable for implementing the present invention with support for different types of terminals (examples of possible terminals). This is basically the same as described in Fig. 1, but with added servers serving other services like interactive TV, WEB, WAP etc.

The invention described herein is not restricted to the setup described, but may be implemented on any setup with users using any form of interactive service using a screen to present animations.

## Claims

1. Method for communicating synchronous information and gestures from a single user (200) on a terminal (205) to a plurality of users (210, 220) on other terminals (215, 225) in a network (290), **characterised in that** the method comprises the steps of:
a) presenting users (200, 210, 220) in the form of animated objects (230, 240, 250) freely moveable on the terminals screens (205, 215, 225), said animated objects (230, 240, 250) floating over the screen background (260, 270, 280) and any applications bn the screen (205, 215, 225),
b) initiating, upon detecting objects (240, 250) which represent other users (210, 220) on the screen (205), in the proximity zone of the object (230) representing said single user (200), interaction with said other terminals (215, 225) associated with respective other users (210, 220),
c) on one terminal (205), receiving signals from a user operated input device (265) indicative of a specific action or expression to be represented as animation of the said object (230) representing said user (200),
d) reconstructing and playing an animation representing the action or expression corresponding to said signals received from a user operated input device (265), on said one user terminal (205),
e) transmitting through said network (290) to the other terminals (215, 225), the received signals from the user input device (265), describing the initiated action, making thus this information available for other users (210, 220).

2. Method according to claim 1, where in step b) the initiation is activated when objects (230, 240, 250) placed freely on the screen (205, 215, 225), are moved closer to each other than 300 twips on the user screen (205, 215, 225).

3. Method according to claim 1, where in step b) the initiation is activated when users (200, 210, 220) interact with the objects (230, 240, 250) representing themselves on the user screen (205, 215, 225).

4. Method according to claim 1, where in step b) the initiation is activated when users (200, 210, 220) interact with an object (230, 240, 250) representing another user on the user screen (205, 215, 225).

5. Method according to claim 1, where in step c) the animation signals received are instructions to a skeletal animation system.

6. Method according to claim 1, where in step c) the animations are represented as floating above the background (260, 270, 280) and other applications on the screen (205, 215, 225) by clipping the region on which the animations are represented around the edge of the animated object (230, 240, 250).

7. Method according to claim 1, where in step c) the animations are represented in the form of 3D renderings created from the animation signals by a processor on the user's terminal (205, 215, 225).

8. Method according to claim 1, where in step d) the reconstruction includes receiving and interpreting animation information sent from other users (200, 210, 220), checking if animation already exists on the user's terminal (205, 215, 225).

9. Method according to claim 1, where in step e) the signals are transmitted in the form of XML encoded messages.

10. Method according to claim 1, where in step e) the signals are transmitted in the form of SOAP messages transmitted over HTTP.

11. Method according to claim 1, where in step e) the signals are transmitted over TCP or UDP protocols.

12. Method according to claim 1, where in step e) the input device (265) is a computer mouse, keyboard, remote control, pointing device, VR peripherals, camera and/or voice commands communicating the specific action or expression.

13. A method according to claim 1, **characterised in that** step b comprises:
initiating, upon detecting 2 or more objects (240, 250) which represent other users (210, 220) on the screen (205), in the proximity zone of the object (230) representing the single user (200), group communication and
interaction with said other terminals (215, 225) associated with respective other users (210, 220), and persisting the group to a storage structure on the network.

## Patentansprüche

1. Verfahren zum Kommunizieren synchroner Information und Gesten von einem einzelnen Benutzer (200) an einem Endgerät (205) zu einer Vielzahl von Benutzern (210, 220) an anderen Endgeräten (215, 225) in einem Netz (290), **dadurch gekennzeichnet, dass** das Verfahren die Schritte umfasst:
a) Präsentation von Benutzern (200, 210, 220) in Form von frei auf den Bildschirmen (205, 215, 225) der Endgeräte beweglichen animierten Objekten (230, 240, 250), wobei die animierten Objekte (230, 240, 250) die über den Bildschirmhintergrund (260, 270, 280) gleiten, und irgendwelche Anwendungen auf dem Schirm (205, 215, 225),
b) auf das Erfassen von Objekten (240, 250), die andere Benutzer (210, 220) auf den Schirmen (205) repräsentieren, in dem Nahbereich des den einzelnen Benutzer (200) repräsentierenden Objekts (230), Veranlassen einer Interaktion mit den anderen, den jeweiligen anderen Benutzern (210, 220) zugeordneten Endgeräten (215, 225),
c) an einem Endgerät (205), Empfangen von Signalen von einer benutzerbetriebenen Eingabeeinrichtung (265), welche indikativ sind in Bezug auf eine spezifische Aktion oder einen Ausdruck, der als Animation des den Benutzer (200) repräsentierenden Objektes (230) repräsentiert wird,
d) Rekonstruieren und Wiedergeben einer Animation, die die Aktion oder den Ausdruck repräsentierenden, die/der den von einer benutzerbetriebenen Eingabeeinrichtung (265) empfangenen Signalen entsprich, auf dem einem Benutzerendgerät (205),
e) Senden der von der Benutzereingabeeinrichtung (265) empfangenen, die veranlasste Aktion beschreibenden Signale durch das Netz (290) zu den anderen Endgeräten (215, 225), um hierdurch diese Information für andere Benutzer (210, 220) verfügbar zu machen.

2. Verfahren nach Anspruch 1, wobei in Schritt b) das Veranlassen aktiviert wird, wenn frei auf dem Schirm (205, 215, 225) angeordnete Objekte (230, 240, 250) auf den Benutzerschirmen (205, 215, 225) näher zueinander bewegt werden als 300 twips.

3. Verfahren nach Anspruch 1, wobei in Schritt b) das Veranlassen aktiviert wird, wenn Benutzer (200, 210, 220) mit den Objekten (230, 240, 250), die sie selbst auf den Benutzerschirm (205, 215, 225) repräsentieren, interagieren.

4. Verfahren nach Anspruch 1, wobei in Schritt b) das Veranlassen aktiviert wird, wenn Benutzer (200, 210, 220) mit einem einen anderen Benutzer auf dem Benutzerschirm (205, 215, 225) repräsentierenden Objekt (230, 240, 250) interagieren.

5. Verfahren nach Anspruch 1, wobei in Schritt c) die empfangenen Animationssignale Anweisungen zu einem skelettartigen Animationssystem sind.

6. Verfahren nach Anspruch 1, wobei in Schritt c) die Animationen als über den Hintergrund (260, 270, 280) gleitend und andere Anwendungen auf dem Schirm (205, 215, 225) repräsentiert werden durch Ausschneiden der Zone, auf der die Animationen repräsentiert werden, um den Rand des animierten Objekts (230, 240, 250).

7. Verfahren nach Anspruch 1, wobei im Schritt c) die Animationen in Form von 3D-Wiedergaben repräsentiert werden, welche von den Animationssignalen durch einen Prozessor auf dem Endgerät (205, 215, 225) des Benutzers erstellt werden.

8. Verfahren nach Anspruch 1, wobei im Schritt d) die Rekonstruktionen das Empfangen und Interpretieren von Animationsinformation einschließen, die von anderen Benutzern (200, 210, 220) empfangen worden ist, Prüfen, ob bereits Animation auf dem Endgerät (205, 215, 225) des Benutzers existiert.

9. Verfahren nach Anspruch 1, wobei im Schritt e) die Signale in der Form von XML-codierten Nachrichten gesendet werden.

10. Verfahren nach Anspruch 1, wobei im Schritt e) die Signale in Form von SOAP-Nachrichten über HTTP gesendet werden.

11. Verfahren nach Anspruch 1, wobei im Schritt e) die Signale über TCP- oder UDP-Protokolle gesendet werden.

12. Verfahren nach Anspruch 1, wobei im Schritt e) die Eingabeeinrichtung (265) eine Computermaus, eine Tastatur, eine Fernsteuerung, eine Zeigeeinrichtung, VR-Peripheriegeräte, eine Kamera und/oder Sprachbefehle sind, die die spezifische Aktion oder den Ausdruck kommunizieren.

13. Verfahren nach Anspruch 1, **dadurch gekennzeichnet, dass** Schritt b) umfasst:
auf das Empfangen von 2 oder mehr Objekten (240, 250), die andere Benutzer (210, 220) repräsentieren, auf dem Schirm (205) in dem Umgebungsbereich des den einzelnen Benutzer (200) repräsentierenden Objektes (230), Veranlassen von Gruppenkommunikation und Interaktion mit den anderen Endgeräten (215, 225), die jeweiligen anderen Benutzern (210, 220) zugeordnet sind, und Fortbestehenlassen der Gruppe zu einer Speicherstruktur im Netz.

## Revendications

1. Procédé pour communiquer des informations et des gestes synchrones à partir d'un utilisateur particulier (200) sur un terminal (205) à une pluralité d'utilisateurs (210, 220) sur d'autres terminaux (215, 225) dans un réseau (290), **caractérisé en ce que** le procédé comprend les étapes consistant à :
a) présenter des utilisateurs (200, 210, 220) sous la forme d'objets animés (230, 240, 250) déplaçables librement sur les écrans (205, 215, 225) des terminaux, lesdits objets animés (230, 240, 250) flottant sur le fond (260, 270, 280) de l'écran et sur d'éventuelles applications présentes à l'écran (205, 215, 225),
b) instaurer, lorsque des objets (240, 250) qui représentent d'autres utilisateurs (210, 220) sur l'écran (205) ont été détectés, dans la zone de proximité de l'objet (230) représentant ledit utilisateur particulier (200), une interaction avec lesdits autres terminaux (215, 225) associés aux autres utilisateurs (210, 220) respectifs,
c) sur un terminal (205), recevoir des signaux émis par un périphérique d'entrée (265) opéré par un utilisateur indiquant une action ou une expression spécifique devant être représentée comme une animation dudit objet (230) représentent ledit utilisateur (200),
d) reconstruire et reproduire une animation représentant l'action ou l'expression correspondant auxdits signaux reçus à partir d'un périphérique d'entrée (265) opéré par un utilisateur, sur ledit un terminal utilisateur (205),
e) transmettre par l'intermédiaire dudit réseau (290) aux autres terminaux (215, 225), les signaux reçus à partir du périphérique d'entrée utilisateur (265), décrivant l'action instaurée, rendant ainsi ces informations disponibles pour d'autres utilisateurs (210, 220).

2. Procédé selon la revendication 1, dans lequel à l'étape b) l'instauration est activée lorsque des objets (230, 240, 250), placés librement sur l'écran (205, 215, 225), sont déplacés à moins de 300 twips les uns des autres sur l'écran (205, 215, 225) utilisateur.

3. Procédé selon la revendication 1, dans lequel à l'étape b) l'instauration est activée lorsque des utilisateurs (200, 210, 220) interagissent avec les objets (230, 240, 250) les représentant sur l'écran (205, 215, 225) utilisateur.

4. Procédé selon la revendication 1, dans lequel à l'étape b) l'instauration est activée lorsque des utilisateurs (200, 210, 220) interagissent avec un objet (230, 240, 250) représentant un autre utilisateur sur l'écran (205, 215, 225) utilisateur.

5. Procédé selon la revendication 1, dans lequel à l'étape c) les signaux d'animation reçus sont des instructions d'un système d'animation de squelette.

6. Procédé selon la revendication 1, dans lequel à l'étape c) les animations sont représentées comme flottant sur le fond (260, 270, 280) de l'écran et sur les autres applications présentes à l'écran (205, 215, 225) en découpant la région dans laquelle les animations sont représentées autour du bord de l'objet animé (230, 240, 250).

7. Procédé selon la revendication 1, dans lequel à l'étape c) les animations sont représentées sous la forme de rendus 3D créés à partir des signaux d'animation par un processeur situé dans le terminal (205, 215, 225) de l'utilisateur.

8. Procédé selon la revendication 1, dans lequel à l'étape d) la reconstruction comprend la réception et l'interprétation des informations d'animation envoyées par d'autres utilisateurs (200, 210, 220), un contrôle pour savoir si l'animation existe déjà sur le terminal (205, 215, 225) de l'utilisateur.

9. Procédé selon la revendication 1, dans lequel à l'étape e) les signaux sont transmis sous la forme de messages codés XML.

10. Procédé selon la revendication 1, dans lequel à l'étape e) les signaux sont transmis sous la forme de messages SOAP transmis sur HTTP.

11. Procédé selon la revendication 1, dans lequel à l'étape e) les signaux sont transmis sur les protocoles TCP ou UDP.

12. Procédé selon la revendication 1, dans lequel à l'étape e) le périphérique d'entrée (265) est une souris, un clavier, un contrôle distant, un dispositif de pointage, des périphériques VR, une caméra et/ou des commandes vocales communiquant l'action ou l'expression spécifique.

13. Procédé selon la revendication 1, **caractérisé en ce que** l'étape b comprend :
l'instauration, lorsque 2 objets (240, 250) ou plus qui représentent d'autres utilisateurs (210, 220) ont été détectés sur l'écran (205), dans la zone de proximité de l'objet (230) représentant l'utilisateur particulier (200), d'une communication et d'une interaction de groupe avec lesdits autres terminaux (215, 225) associés aux autres utilisateurs (210, 220) respectifs, et l'enregistrement persistant du groupe sur une structure de stockage du réseau.
